# EUROPEAN PATENT SPECIFICATION

(11) **EP 1 757 467 B1**
(45) Date of publication and mention of the grant of the patent: **25.06.2008**
(21) Application number: 06017527.0
(22) Date of filing: 23.08.2006
(51) Int. Cl.: B60G 7/00, F16C 7/02, B23K 33/00, B22D 17/00

(54) **Welded, multiple cast control arm and method of fabrication thereof**
Geschweisster, mehrstufig gegossener Führungslenker und dessen Herstellungsverfahren
Bras de suspension, coulé et soudé et son procédé de fabrication

(30) Priority: 23.08.2005 US 710151 P; 22.06.2006 US 472382
(43) Date of publication of application: 28.02.2007
(73) Proprietor: SPX Corporation, Charlotte, NC 28277 (US)
(72) Inventor: Seaver, Sean P., Plainwell, MI 49080 (US); Hollacher, Robert, St. Joseph, MI 49085 (US)
(74) Representative: Lang, Friedrich

(56) References cited:
- EP-A- 1 671 821
- EP-A1- 0 713 791
- EP-A2- 0 925 964
- WO-A-00/01547
- DE-A1- 3 909 916
- DE-A1-0102004 003 15

## Description

### FIELD OF THE INVENTION

This invention relates to suspension systems for automotive vehicles. More particularly, this invention relates to a control arm apparatus and method.

### BACKGROUND OF THE INVENTION

A vehicle suspension system allows a body of an automobile vehicle to travel forward with minimum vibration and insulates the vehicle body against road shock. The suspension also allows the vehicle to makes turns without body roll or tire spinning. Some components of the vehicle suspension system are control arms, or struts, that keep the wheels in proper position. The control arms allow the wheel to move vertically while preventing movement in any other direction. The control arm functions as a spring to prevent a wheel assembly from moving in order to cushion the ride. In addition, the control arm prevents the wheel from moving inward or outward while the vehicle is moving.

Document EP 1 671 821 A1, which constitutes prior art according to Article 54(3) EPC, discloses a trailing arm assembly for a suspension which includes at least a first and a second cast component. The first and the second cast component are welded to each other to substantially surround an outer perimeter of an axle member. The first cast component is then welded to one side of the axle member at a first weld and then the second component is welded to an opposite side of the axle member at a second weld. A bushing tube is then welded to one of the first and second cast components and is subsequently attached to a vehicle frame member.

In document DE 39 09 916 A1 there is disclosed a wheel suspension of an air suspended vehicle, comprising an upper component, a lower component and a vertical component disposed between the upper and lower components, wherein the vertical component is welded to the upper and lower components.

A conventional control arm includes at least a one piece member formed by casting or forging. One piece casting has limited strengths and requires large presses, which are inefficient in the use of raw materials and are expensive. Control arms can also be formed by stamping, often several times, which can be quite expensive and difficult to manufacture. A disadvantage is that these manufacturing processes result in heavy control arms that add to the total weight of the vehicle, slowing down the vehicle.

Accordingly, there is a need for an inexpensive way to manufacture a control arm that increases the mileage of vehicles through weight reduction. However, vehicle performance and reliability must be maintained. Thus there is a need to reduce the cost, weight and complexity of vehicle suspension systems, yet provide a smooth ride for the driver. There also exists a need for increased strength-to-weight ratio without unnecessary material addition.

### SUMMARY OF THE INVENTION

The foregoing needs are met, to a great extent, by the present invention, wherein in one aspect an apparatus is provided that in some embodiments an inexpensive way to manufacture a control arm that increases the mileage of vehicles through weight reduction.

In accordance with one embodiment of the present invention, a vehicle control arm includes, a first component having a first perimeter formed by a casting process, a second component having a second perimeter formed by a casting process defining a hollow interior and constructed and arranged to seat said first component within said second component such that when said first component is seat within said second component said first perimeter and said second perimeter are substantially aligned, wherein said first and second components are welded together at said first and second perimeters.

In accordance with another embodiment of the present invention, a control arm of a vehicle suspension system, includes, a first component having a first perimeter formed by a casting process, and a second component having a second perimeter moveably mounted to the vehicle suspension system and constructed and arranged to control lateral movement of a wheel assembly operatively coupled to the vehicle suspension system such that as the wheel assembly rotates, the wheel assembly is prevented from moving in a lateral direction, said second component being formed by a casting process defining a hollow interior to reduce a weight thereof and constructed and arranged to receive said first component, said first and second components being welded together along said first and second perimeters.

In accordance with yet another embodiment of the present invention, a method of fabricating a vehicle control arm, includes, casting a first component having a first perimeter, casting a second component having a second perimeter defining a hollow interior and constructed and arranged to seat said first component within said second component such that when said first component is seated within said second component said first perimeter and said second perimeter are substantially aligned, and fixably attaching said first component to said second component such that said first and second components are welded together along said first and second perimeters.

There has thus been outlined, rather broadly, certain embodiments of the invention in order that the detailed description thereof herein may be better understood, and in order that the present contribution to the art may be better appreciated. There are, of course, additional embodiments of the invention that will be described below and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention. It is important, therefore, that the claims be regarded as including such equivalent constructions insofar as they do not depart from the scope of the present invention.

### BRIEF DESCRIPTION OF THE DRAWINGS

FIG. 1 is an illustration of an automobile's front wheel drive suspension assembly.

FIG. 2 is an illustration of an automobile's control arm according to an embodiment of the present invention.

### DETAILED DESCRIPTION

The foregoing needs are met, to a great extent, by the present invention, wherein in one aspect an apparatus is provided that in some embodiments combines various methods used to cast and weld a control arm in an efficient manner. There are, of course, additional embodiments of the invention that will be described below and which will form the subject matter of the claims appended hereto.

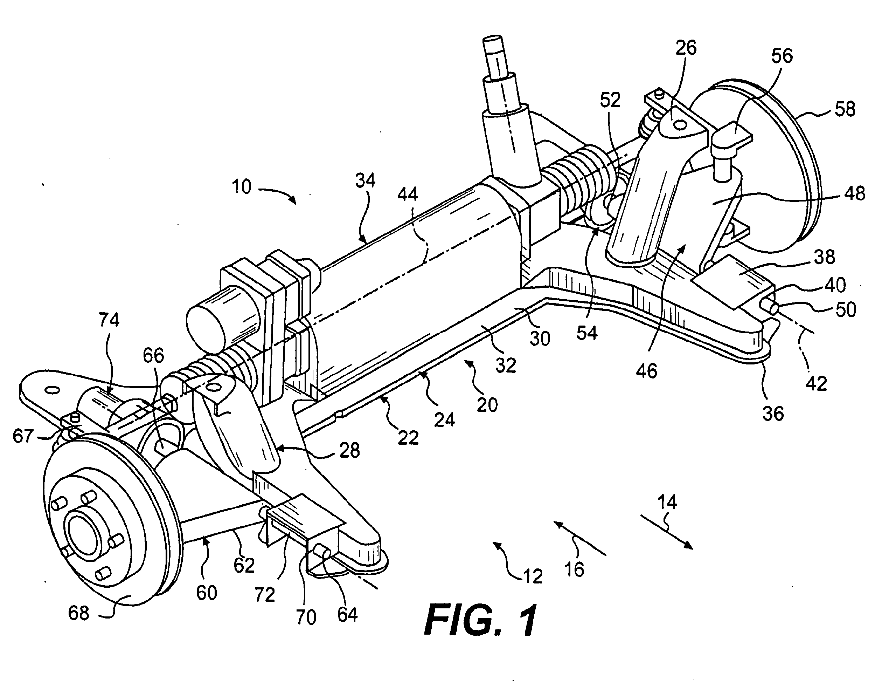

As representative of an embodiment of the present invention, FIG. 1 is an illustration of an automobile's front wheel drive suspension assembly. The steering system 10 forms part of a vehicle shown partially at 12. A forward direction in the vehicle is indicated by the arrow 14, and a rearward direction in the vehicle is indicated by the arrow 16. The vehicle 12 includes wheels (not shown) for the movement of the vehicle 12.

The vehicle 12 includes a cross member 20, which extends across the vehicle 12 between the wheels. The cross member 20 supports the steering system 10, and also supports the wheels of the vehicle 12. The cross member 20 includes a lower part 22, an upper part 24, a left upright 26, and a right upright 28.

The upper part 24 includes a central portion 30 which includes a base portion 32 and a rack housing 34. The upper part 24 also includes a left front arm portion 36 which extends laterally outward and forward from the central portion 30 of the upper part 24, in and above the plane of the base portion 32. The left front arm portion 36 includes a left control arm front support portion 38 that has openings 40 centered on a left pivot axis 42. The support portion 38 is located forward of a steering axis 44.

The steering system 10 includes a left control arm shown schematically at 46. The left control arm 46 is supported on the cross member 20 for pivotal movement relative to the cross member 20. Specifically, the left control arm 46 includes a main body portion 48, a forward pivot pin 50, and a rear pivot pin 52. The forward pivot pin 50 is received in the openings 40 in the support portion 38. The rear pivot pin 52 is received in a left control arm rear support 54.

As a result, the left control arm 46 is supported on the cross member 20 for pivotal movement relative to the cross member 20 about the left pivot axis 42.

The steering system 10 includes a left steering knuckle 56 and is supported on the left control arm 46 for pivotal movement relative to the control arm about a generally vertical axis. The left steering knuckle 56 is fixed for movement with a rotor 58. The rotor 58 supports the left steerable road wheel (not shown).

The steering system 10 includes a right control arm 60 which is supported on the cross member 20 for pivotal movement relative to the cross member 20. Specifically, the right control arm 60 includes a main body portion 62, a forward pivot pin 64, and a rear pivot pin 66. The forward pivot pin 64 is supported in openings 70 in a right control arm front support portion 72. The rear pivot pin 66 is supported in a right control arm rear support 74. As a result, the right control arm 60 is supported on the cross member 20 for pivotal movement relative to the cross member 20.

The vehicle 12 includes a right steering knuckle 67 supported on the right control arm 60 for pivotal movement relative to the right control arm 60 about a generally vertical axis. The steering knuckle 67 is fixed for movement with a rotor 68. The rotor 68 supports the right steerable road wheel (not shown).

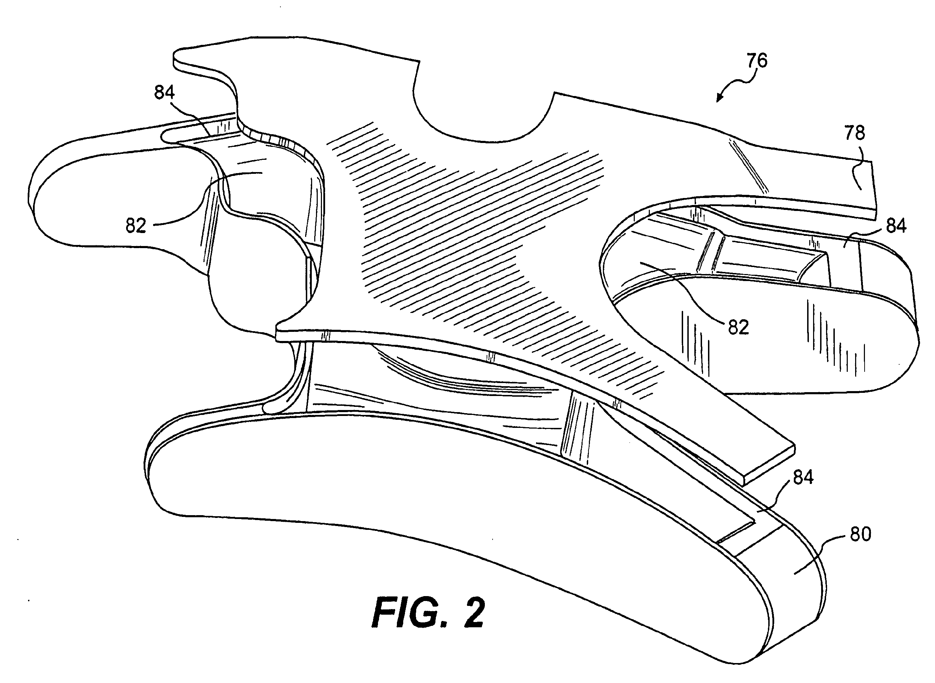

FIG. 2 is an illustration of an automobile's control arm according to an embodiment of the present invention. An upper subcomponent 78 of the control arm 76 is welded to a lower subcomponent 80 at the perimeter 84 of the upper subcomponent 78. The lower subcomponent 80 contains a hollow space 82. This hollow space 82 reduces the amount of material required for the lower subcomponent 80, providing for a weight reduction. It also allows for ease of manufacturing in that there is less material to work with. Moreover, it provides for lower cost while maintaining high integrity for the lower subcomponent 80.

Although, an embodiment of the present invention provides for the lower subcomponent 80 to be welded to the upper subcomponent 78 at the perimeter 84, the lower subcomponent 80 may be welded to the upper subcomponent 78 in any manner known to one skilled in the art. For example, the lower subcomponent 80 or the upper subcomponent 78 may have a seat disposed within, to accept the other respective subcomponent. Therefore, the weld may be within the subcomponents.

Cast control arms are traditionally made from casting processes that require thick walls to achieve desired mechanical properties for the control arm. Other casting methods use coring that requires the core to be removed after the casting has been ejected from the mold. However, the control arm in an embodiment of the present invention, is cast as two or more pieces, for example as lower subcomponent 80 and upper subcomponent 78. Further, in another embodiment, the control arm 76 may be formed of three subcomponents. For example. There may be an upper subcomponent, a lower sub component, a vertical wall coupling the upper and lower subcomponents together. The control arm could have a basic "U" shape, "I" shape or any other shape that allows the control arm to achieve the proper mechanical properties.

The components herein described may be produced by various casting methods. For example, die casting is a manufacturing process used to make a strong, durable and intricate product that can be mass produced. Die casting is also referred to as high pressure casting and has the unique ability to transform raw material into a finished form in a short cycle time. Often the finished product requires no additional machining or other operations, and is dimensionally stable. Die casting is an efficient, economical process that allows for a broad range of geometries, high speed production and close tolerances resulting in heat resistant, stronger products. Thin wall castings are stronger and lighter than those possible with other casting methods.

Additionally, a proprietary process at Alcan Automotive, (Alcan, Inc., Farmington Hills, Michigan) uses High-Q-Cast die casting to lower or eliminate the porosity that is found in parts that are cast using traditional die casting techniques. This process involves a cold chamber die casting process. Specifically, Alcan's process uses their minimum fill time (MFT) technology. MFT uses a combination of a special heat treatment, lubrication, specialized gating and degassing equipment. Parts cast using Alcan's High-Q-Cast technology may then be welded to form a cast control arm, according to an embodiment of the present invention.

Another die casting process that can be used is the Vacural (TM) process offered by Muhler Weingarten of Germany. This involves high level vacuum die casting. The Vacural (TM) process includes evacuating the entire die cavity and shot system as it draws melt under vacuum into the shot tube and then injecting it under high pressure into the die. The die cavity and the shot must be sealed well to avoid the intrusion of air. Thus, if the atmosphere in the shot system and die cavity is significantly reduced or eliminated, no air will then be available to be trapped in the metal during the cavity fill stage.

High pressure casting at forces exceeding 4500 pounds per square inch also allow for squeeze casting and semi-solid die casting. Squeeze casting is a method by which molten alloy is cast without turbulence and gas entrapment at high pressure, to yield high quality, dense and treatable components. Semi-solid molding uses semi-solid metal billets cast to provide dense heat treatable casting with low porosity. Thus, the subcomponents described herein may be cast using either SSM casting or molten metal squeeze casting.

The die casting process consists of injecting molten metal under high pressure into a steel mold called a die. Die casting produces complex shapes at lower costs. Traditional control arms formed by forging do not have such close tolerances and have thicker walls requiring more material and therefore, higher costs. In addition, coring holes is not available with forged control arms or those made by stamping because stamping processes result in a variety of thicknesses, which may be undesirable and increase cost and assembly time. In addition, these other processes add more weight to the part and to the finished product thereby, lowering the strength to weight ratio.

The present invention allows for the cast control arm subcomponent pieces to be welded together, forming the control arm with the necessary mechanical properties. The resulting welded control arm withstands stresses that would typically require much thicker and heavier casting.

The welding process may be performed by gas tungsten arc welding which is frequently referred to as tungsten inert gas welding or TIG welding. This is a welding process used for high quality precision welding. In TIG welding, an arc is formed between a non-consumable tungsten electrode and the metal being welded. Gas is fed through the torch to shield the electrode and molten weld pool. If a filler wire is used, it is added to the weld pool separately. TIG welding provides several benefits, such as superior quality welding, precise control of welding variables such as heat, low distortion and low spatter. Also, welds can be made with or without filler metal.

The filler material metal added separately allows the process to be very flexible. For example, argon is used as the shielding gas and changing the diameter of the tungsten electrode allows the welding to be performed with a wide range of heat input at different thicknesses.

TIG welding can be used for welding aluminum. The process used for welding of pressure vessels, heat exchangers and pipes. Tightness is important since the process produces welds with very low pore fractions. TIG welding is also beneficial for welds with frequent starts and stops and for short welds due to its excellent quality with low porosity.

Aluminum alloy is lightweight and has high dimensional stability for complex shapes and thin walls. Aluminum has high thermal and electrical conductivity, along with corrosion resistance.

Pieces that are welded together are usually formed, sheared, sawed or machined prior to the welding operation. Thus, it has not been known to weld products that have been cast. Being able to weld cast products is, therefore, a more efficient way of producing parts with great strength, yet low weight.

A welded cast control arm has high integrity yet low weight. High integrity casting allows for low porosity and shearing and results in a strong cast product. Welding cast products allows for such complex geometries to be formed whereas traditional casting lacks the flexibility of producing complex geometries. A welded cast control arm may be formed of two or more pieces of cast products that are welded together.

Basic configurations include "I" and "U" shapes that allow for a neutral axis and no loads. It is possible to weld at the neutral axis. Thus, using welding at the part's weakest point results in greater strength and greater margin of error in that no additional porosity is produced in the product during welding, allowing the weld itself to have some porosity. Thus, using high intensity casting allows for low porosity, which ensures that the porosity caused by the welding itself at the weld joint would not lead to an inferior product. Also, the welded cast control arm is hollow on the inside allowing for less material, waste and cost. Although this particular disclosure relates to a control arm in vehicle suspension systems it has a much broader application in that any cast product may be welded.

Traditionally, control arms were forged or sold as one solid piece. The combination of welding and die casting has been thought to cause much greater porosity leading to weakness of the materials. Thus, the combination of welding and casting was believed to cause excess porosity that would be detrimental to the product. However, with the application of the present invention, welding cast products may not result in undesirable porosity. Instead, high integrity die casting produces such low porosity that the additional porosity caused by welding is minimal and is well within the tolerances for producing a favorable product.

Thus, the present invention allows for considerable weight savings as well as an inexpensive and cost effective method of producing control arms. This welding of cast products allows for complex geometries not obtainable through casting alone or a variety of other techniques that are presently used to form control arms.

## Claims

1. A vehicle control arm (76) comprising:
a first component (78) having a first perimeter (84) formed by a casting process; and
a second component (80) having a second perimeter formed by a casting process defining a hollow interior (82),
wherein
the second component (80) is constructed and arranged to seat said first component (78) within said second component (80) such that when said first component (78) is seated within said second component (80) said first perimeter (78) and said second perimeter are substantially aligned,
wherein said first (78) and second components (80) are welded together at said first (84) and second perimeters.

2. The vehicle control arm (76) of claim 1,
**characterized in that**
the first component (78) is substantially flat.

3. The vehicle control arm (76) of claim 1,
**characterized in that**
the first component (78) comprises a flange at the first perimeter (84).

4. The vehicle control arm (76) of claim 1,
**characterized in that**
the second component (80) comprises a base surrounded by a generally vertical wall at the second perimeter.

5. The vehicle control arm (76) of claim 4,
**characterized in that**
the wall comprises a seat.

6. The vehicle control arm (76) of claim 1,
**characterized in that**
the first component (78) comprises a flange at the first perimeter (84) and the second component (80) comprises a wall having a seat, and wherein the seat is configured to couple to the flange.

7. The vehicle control arm (76) of claim 6,
**characterized in that**
the flange is welded on to the seat at the first (84) and second perimeters.

8. The vehicle control arm (76) of claim 1,
**characterized in that**
the first (84) and second perimeters are welded using gas tungsten arc welding.

9. The vehicle control arm (76) of claim 1,
**characterized in that**
the first (78) and second components (80) are fabricated using high pressure die casting techniques.

10. The vehicle control arm (76) of claim 1,
**characterized in that**
the first (78) and second components (80) are fabricated using High-Q-Cast die casting.

11. The vehicle control arm (76) of claim 1,
**characterized in that**
the second component (80) is substantially hollow.

12. The vehicle control arm (76) of claim 1,
**characterized in that**
the first (78) and second components (80) are fabricated from molten metal squeeze casting.

13. The vehicle control arm (76) of claim 1,
**characterized in that**
the first (78) and second components (80) are fabricated from semi-solid metal slurry.

14. The vehicle control arm (76) of claim 1,
**characterized in that**
the first (78) and second components (80) generally form an "I" shape.

15. The vehicle control arm (76) of claim 1,
**characterized in that**
the first (78) and second components (80) generally form an "U" shape.

16. A method of fabricating a vehicle control arm (76), comprising:
casting a first component (78) having a first perimeter (84);
casting a second component (80) having a second perimeter defining a hollow interior (82) and constructed and arranged to seat said first component (78) within said second component (80) such that when said first component (78) is seated within said second component (80) said first perimeter (84) and said second perimeter are substantially aligned; and
fixably attaching said first component (78) to said second component (80) such that said first (78) and second components (80) are welded together along said first (84) and second perimeters.

17. A control arm (76) of a vehicle suspension system, comprising:
a first component (78) having a first perimeter (84) formed by a casting process, and
a second component (80) having a second perimeter moveably mounted to the vehicle suspension system and constructed and arranged to control lateral movement of a wheel assembly operatively coupled to the vehicle suspension system such that as the wheel assembly rotates, the wheel assembly is prevented from moving in a lateral direction,
said second component (80) being formed by a casting process defining a hollow interior (82)
to reduce a weight thereof,
wherein
the second component (80) is constructed and arranged to receive said first component (78), said first (78) and second components (80) being welded together along said first (84) and second perimeters.

18. The control arm (76) of claim 17,
**characterized in that**
said second component (80) is constructed and arranged to seat said first component (78) within said second component (80) such that when said first component (78) is seated within said second component (80) said first perimeter (84) and said second perimeter are substantially aligned.

## Patentansprüche

1. Führungslenker (76) eines Kraftfahrzeugs, umfassend:
eine erste Komponente (78) geformt durch ein Gießverfahren mit einem ersten Umfang (84); und
eine zweite Komponente (80) geformt durch ein Gießverfahren mit einem, einen hohlen Innenraum (82) definierenden, zweiten Umfang,
**dadurch gekennzeichnet, dass**
die zweite Komponente (80) derart zum Aufnehmen der ersten Komponente (78) innerhalb der zweiten Komponente (80) konstruiert und angeordnet ist, dass wenn die erste Komponente (78) innerhalb der zweiten Komponente (80) eingesetzt ist, der erste Umfang (78) und der zweite Umfang im Wesentlichen bündig sind,
wobei die erste (78) und zweite Komponente (80) miteinander an dem ersten (84) und zweiten Umfang verschweißt sind.

2. Führungslenker (76) eines Kraftfahrzeugs nach Anspruch 1,
**dadurch gekennzeichnet, dass**
die erste Komponente (78) im Wesentlichen flach ist.

3. Führungslenker (76) eines Kraftfahrzeugs nach Anspruch 1,
**dadurch gekennzeichnet, dass**
die erste Komponente (78) einen Flansch beim ersten Umfang (84) umfasst.

4. Führungslenker (76) eines Kraftfahrzeugs nach Anspruch 1,
**dadurch gekennzeichnet, dass**
die zweite Komponente (80) eine, beim zweiten Umfang generell durch eine vertikale Wandung umgebene, Basis umfasst.

5. Führungslenker (76) eines Kraftfahrzeugs nach Anspruch 4,
**dadurch gekennzeichnet, dass**
die Wandung eine Auflage umfasst.

6. Führungslenker (76) eines Kraftfahrzeugs nach Anspruch 1,
**dadurch gekennzeichnet, dass**
die erste Komponente (78) einen Flansch beim ersten Umfang (84) umfasst und die zweite Komponente (80) eine Wandung mit einer Auflage umfasst, und worin die Auflage zum ankuppeln an den Flansch konfiguriert ist.

7. Führungslenker (76) eines Kraftfahrzeugs nach Anspruch 6,
**dadurch gekennzeichnet, dass**
der Flansch auf der Auflage bei dem ersten (84) und zweiten Umfang geschweißt ist.

8. Führungslenker (76) eines Kraftfahrzeugs nach Anspruch 1,
**dadurch gekennzeichnet, dass**
der erste (84) und zweite Umfang durch Wolfram-Inertgas-Schweißen (WIG) geschweißt sind.

9. Führungslenker (76) eines Kraftfahrzeugs nach Anspruch 1,
**dadurch gekennzeichnet, dass**
die erste (78) und zweite Komponente (80) durch ein Hochdruck-Spritzgussverfahren hergestellt sind.

10. Führungslenker (76) eines Kraftfahrzeugs nach Anspruch 1,
**dadurch gekennzeichnet, dass**
die erste (78) und zweite Komponente (80) durch ein High-Q-Cast-Spritzgussverfahren hergestellt sind.

11. Führungslenker (76) eines Kraftfahrzeugs nach Anspruch 1,
**dadurch gekennzeichnet, dass**
die zweite Komponente (80) im Wesentlichen hohl ist.

12. Führungslenker (76) eines Kraftfahrzeugs nach Anspruch 1,
**dadurch gekennzeichnet, dass**
die erste (78) und zweite Komponente (80) durch ein geschmolzenes Metall Pressgießen hergestellt sind.

13. Führungslenker (76) eines Kraftfahrzeugs nach Anspruch 1,
**dadurch gekennzeichnet, dass**
die erste (78) und zweite Komponente (80) durch halbfeste Metall Gießschlicker hergestellt sind.

14. Führungslenker (76) eines Kraftfahrzeugs nach Anspruch 1,
**dadurch gekennzeichnet, dass**
die erste (78) und zweite Komponente (80) generell eine "I"-Form bilden.

15. Führungslenker (76) eines Kraftfahrzeugs nach Anspruch 1,
**dadurch gekennzeichnet, dass**
die erste (78) und zweite Komponente (80) generell eine "U"-Form bilden.

16. Verfahren zur Herstellung eines Kraftfahrzeug Führungsarms, umfassend:
Gießen einer ersten Komponente (78) mit einem ersten Umfang (84);
Gießen einer zweiten Komponente (80) mit einem einen hohlen Innenraum definierenden zweiten Umfang und konstruiert und angeordnet, um die erste Komponente (78) innerhalb der zweiten Komponente (80) aufzunehmen, derart, dass wenn die erste Komponente (78) innerhalb der zweiten Komponente (80) eingesetzt ist, der erste Umfang (84) und der zweite Umfang im Wesentlichen bündig sind; und
fixierbares Anbringen der ersten Komponente (78) an der zweiten Komponente (80) derart, dass die erste (78) und zweite Komponente (80) miteinander entlang des ersten (84) und zweiten Umfangs verschweißt sind.

17. Führungsarm (76) eines Kraftfahrzeug Federungssystems, umfassend:
eine erste Komponente (78) mit einem ersten Umfang (84) geformt durch ein Gießverfahren, und
eine zweite Komponente (80) mit einem zweiten Umfang, beweglich montiert an einem Kraftfahrzeug Federungssystem und konstruiert und angeordnet, um eine laterale Bewegung einer, an das Kraftfahrzeug Federungssystem operativ gekoppelten Rad-Baugruppe zu steuern, derart, dass wenn die Rad-Baugruppe rotiert, die Rad-Baugruppe an einer Bewegung in lateraler Richtung gehindert wird,
die zweite Komponente (80) ist durch ein einen hohlen Innenraum definierendes Gießverfahren geformt, um dessen Gewicht zu reduzieren,
**dadurch gekennzeichnet, dass**
die zweite Komponente (80) konstruiert und angeordnet ist, um die erste Komponente (78) aufzunehmen, die erste (78) und zweite Komponente (80) miteinander entlang des ersten (84) und zweiten Umfangs verschweißt sind.

18. Der Führungsarm (76) nach Anspruch 17,
**dadurch gekennzeichnet, dass**
die zweite Komponente (80) ist konstruiert und angeordnet, um Aufnehmen die erste Komponente (78) innerhalb der zweiten Komponente (80) aufzunehmen, derart, dass wenn die erste Komponente (78) innerhalb der zweiten Komponente (80) eingesetzt ist, der erste Umfang (84) und der zweite Umfang im Wesentlichen bündig sind.

## Revendications

1. Bras de suspension de véhicule (76) comprenant :
un premier composant (78) ayant un premier périmètre (84) formé par un procédé de coulée ; et
un deuxième composant (80) ayant un deuxième périmètre formé par un procédé de coulée définissant un intérieur creux (82),
dans lequel le deuxième composant (80) est conçu et disposé pour recevoir ledit premier composant (78) dans ledit deuxième composant (80) de telle manière que quand ledit premier composant (78) est logé dans ledit deuxième composant (80), ledit premier périmètre (78) et ledit deuxième périmètre sont sensiblement alignés ;
lesdits premier (78) et deuxième composants (80) étant soudés ensemble sur lesdits premier (84) et deuxième périmètres.

2. Bras de suspension de véhicule (76) selon la revendication 1, **caractérisé en ce que** le premier composant (78) est sensiblement plat.

3. Bras de suspension de véhicule (76) selon la revendication 1, **caractérisé en ce que** le premier composant (78) comprend une bride sur le premier périmètre (84).

4. Bras de suspension de véhicule (76) selon la revendication 1, **caractérisé en ce que** le deuxième composant (80) comprend une base entourée par une paroi généralement verticale sur le deuxième périmètre.

5. Bras de suspension de véhicule (76) selon la revendication 4, **caractérisé en ce que** la paroi comprend une assise.

6. Bras de suspension de véhicule (76) selon la revendication 1, **caractérisé en ce que** le premier composant (78) comprend une bride sur le premier périmètre (84) et le deuxième composant (80) comprend une paroi ayant une assise, et dans lequel l'assise est configurée pour se coupler avec la bride.

7. Bras de suspension de véhicule (76) selon la revendication 6, **caractérisé en ce que** la bride est soudée à l'assise sur les premier (84) et deuxième périmètres.

8. Bras de suspension de véhicule (76) selon la revendication 1, **caractérisé en ce que** les premier (84) et deuxième périmètres sont soudés par soudage à l'arc sous gaz inerte.

9. Bras de suspension de véhicule (76) selon la revendication 1, **caractérisé en ce que** les premier (78) et deuxième composants (80) sont fabriqués selon des techniques de coulée sous haute pression.

10. Bras de suspension de véhicule (76) selon la revendication 1, **caractérisé en ce que** les premier (78) et deuxième composants (80) sont fabriqués par coulée sous pression High-Q-Cast.

11. Bras de suspension de véhicule (76) selon la revendication 1, **caractérisé en ce que** le deuxième composant (80) est sensiblement creux.

12. Bras de suspension de véhicule (76) selon la revendication 1, **caractérisé en ce que** les premier (78) et deuxième composants (80) sont fabriqués par forgeage liquide de métal en fusion.

13. Bras de suspension de véhicule (76) selon la revendication 1, **caractérisé en ce que** les premier (78) et deuxième composants (80) sont fabriqués à partir d'une pâte de métal semi-solide.

14. Bras de suspension de véhicule (76) selon la revendication 1, **caractérisé en ce que** les premier (78) et deuxième composants (80) forment globalement une forme de « I ».

15. Bras de suspension de véhicule (76) selon la revendication 1, **caractérisé en ce que** les premier (78) et deuxième composants (80) forment globalement une forme de « U ».

16. Procédé de fabrication d'un bras de suspension de véhicule (76), comprenant :
la coulée d'un premier composant (78) ayant un premier périmètre (84) ;
la coulée d'un deuxième composant (80) ayant un deuxième périmètre définissant un intérieur creux (82) et conçu et disposé pour recevoir ledit premier composant (78) à l'intérieur dudit deuxième composant (80) de telle manière que quand ledit premier composant (78) est logé dans ledit deuxième composant (80), ledit premier périmètre (84) et ledit deuxième périmètre sont sensiblement alignés ; et
l'assemblage fixe dudit premier composant (78) audit deuxième composant (80) de telle manière que lesdits premier (78) et deuxième composants (80) sont soudés ensemble le long desdits premier (84) et deuxième périmètres.

17. Bras de suspension (76) d'un système de suspension de véhicule, comprenant :
un premier composant (78) ayant un premier périmètre (84) formé par un procédé de coulée, et
un deuxième composant (80) ayant un deuxième périmètre monté de manière mobile sur le système de suspension de véhicule et conçu et disposé de façon à contrôler le mouvement latéral d'un assemblage de roue en liaison opérationnelle avec le système de suspension de véhicule de telle manière que lorsque l'assemblage de roue tourne, il est empêché de se déplacer dans le sens latéral,
ledit deuxième composant (80) étant formé par un procédé de coulée définissant un intérieur creux (82) pour réduire son poids,
dans lequel le deuxième composant (80) est conçu et disposé pour recevoir ledit premier composant (78), lesdits premier (78) et deuxième composants (80) étant soudés ensemble le long desdits premier (84) et deuxième périmètres.

18. Bras de suspension (76) selon la revendication 17, **caractérisé en ce que** ledit deuxième composant (80) est conçu et disposé pour recevoir ledit premier composant (78) dans ledit deuxième composant (80) de telle manière que quand ledit premier composant (78) est logé dans ledit deuxième composant (80), ledit premier périmètre (84) et ledit deuxième périmètre sont sensiblement alignés.
